# EUROPEAN PATENT SPECIFICATION

(11) **EP 3 607 099 B1**
(45) Date of publication and mention of the grant of the patent: **12.05.2021**
(21) Application number: 18722894.5
(22) Date of filing: 26.03.2018
(51) Int. Cl.: C22B 3/08, C22B 7/04, C22B 26/12

(54) **PROCESS FOR THE RECOVERY OF LITHIUM**
VERFAHREN ZUR RÜCKGEWINNUNG VON LITHIUM
PROCÉDÉ DE RÉCUPÉRATION DE LITHIUM

(30) Priority: 07.04.2017 EP 17165533
(43) Date of publication of application: 12.02.2020
(73) Proprietor: Umicore, 1000 Brussels (BE)
(72) Inventor: OOSTERHOF, Harald, 2250 Olen (BE); DUPONT, David, 2250 Olen (BE); DROUARD, Wendy, 2250 Olen (BE)
(74) Representative: Umicore RDI Patent Department
(86) International application number: PCT/EP2018/057569
(87) International publication number: WO 2018/184876

(56) References cited:
- WO-A1-2014/154154
- CN-A- 105 907 983
- CN-A- 106 505 270
- ELWERT T ET AL: "Phase composition of high lithium slags from the recycling of lithium ion batteries", WORLD OF METALLURGY - ERZMET, GDMB - MEDIENVERLAG, CLAUSTHAL-ZELLERFELD, DE, vol. 65, no. 3, 1 May 2012 (2012-05-01), pages 163-171, XP009185147, ISSN: 1613-2394

## Description

The present invention relates to an enhanced process for the recovery of lithium from compositions also containing aluminum.

An example of such a metallurgical compositions is the metallurgical slag that is obtained when recycling lithium-ion batteries or their derived products using a pyrometallurgical smelting process. The batteries and a slag-forming flux are melted together at high temperature. An oxygen potential is chosen that results in the formation of a cobalt-nickel-copper metallic phase, and a slag. The more easily oxidized elements, where under lithium, report to the slag. The organic fraction in the batteries is effectively pyrolized, and the residual volatiles are captured in an off-gas purification system.

Other examples of such a relevant metallurgical compositions are some high-performance lithium aluminum alloys and welding fluxes.

The recovery of lithium from such compositions has been studied but remains complex and expensive.

According to known processes, a slag is leached in acidic conditions. A leachate containing most of the lithium is then obtained. The aluminum in the slag is partially soluble, causing problems such as the precipitation of lithium aluminates and the formation of aluminum hydroxide flakes that tend to adsorb lithium. The phenomena may severely degrade the lithium recovery yield.

CN105907983 (A) also proposes a method to extract lithium from slag. The slag is dissolved in sulfuric acid in dilute conditions, in order to prevent the precipitation of lithium aluminates when the solution is neutralized to a pH of about 6. The filtrate needs to be concentrated by evaporating most of the water before being further processed for lithium recovery. Although technically feasible, this process is therefore particularly expensive. Also, the amounts of reagents needed for the neutralization and purification are considerable, and leads to the production of gypsum, which cannot be valorized.

WO2011141297 (A1) makes use of a lithium-bearing slag produced from the pyrometallurgical treatment of lithium-ion batteries as an additive in concrete. This method takes advantage of the beneficial properties of lithium to reduce the reaction of alkali metals in the concrete. It provides for a meaningful utilization of the lithium present in slag as such, but does not lead to the actual recovery of lithium for reuse in other domains.

It thus appears that for many materials, and for pyrometallugical slags in particular, both aluminum and lithium leach together in acid media. Moreover, both elements tend to co-precipitate during the purification of the leach solution. The principal aim of the disclosed process is therefore to deplete the leach solution in aluminum, while leaving the lithium untouched. Lithium can then be precipitated as a relatively pure component from the leach.

The present invention divulges a process for the recovery of lithium from materials according to aforementioned compositions, comprising the following steps:
- Optional size reduction of the material, in particular when dealing with slags;
- Leaching the metallurgical composition by contacting with a sulfuric acid aqueous solution at a pH of 3 or less, thereby obtaining a residue comprising insoluble compounds, and a first leachate comprising lithium and aluminum;
- Optionally neutralizing the first leachate comprising lithium and aluminum to a pH of 2 to 4, thereby precipitating a residue comprising a first part of the aluminum, and obtaining a second leachate comprising lithium;
- Adding a source of phosphate ions to the first leachate comprising lithium and aluminum, or, with the proviso that the optional neutralizing of the first leachate is performed, to the second leachate comprising lithium and aluminum, thereby precipitating a residue comprising a second part of the aluminum, and obtaining a third leachate comprising lithium;
- Optionally neutralizing the third leachate comprising lithium and aluminum to a pH of 3 to 4, thereby precipitating a residue comprising a third part of the aluminum, and obtaining a fourth leachate comprising lithium; and,
- Separating the residue comprising the second part of the aluminum from the third leachate by filtration, or, with the proviso that the optional neutralizing of the third leachate is performed, separating the residue comprising the third part of the aluminum from the fourth leachate by filtration.

The optional size reduction is advantageous to enhance the leaching kinetics. Various techniques can be applied for size reduction of slags. In order to achieve fast leaching kinetics, a particle size (d₅₀) of less than 250 µm is desired. Larger particle size will increase the leaching time.

Leaching of the lithium-bearing composition is typically performed under mild conditions that aim to maximize the lithium yield while avoiding the co-dissolution of aluminum. Temperatures of over 50°C are favored, as this will accelerate the dissolution kinetics. There is however no need to perform the leaching in a pressure vessel. The leaching step has to be performed at a pH of 3 or below, to ensure good leaching yields for lithium. Within a pH range of 1 to 3, good lithium yields can be combined with some selectivity towards aluminum.

An optional neutralization of the first leachate allows for the precipitation of a first part of the aluminum in a residue. Phosphates are typically more expensive than ordinary neutralizing agents such as lime or limestone. The upfront removal of a part of the dissolved aluminum using conventional neutralizing agents thus offers an economic advantage compared to the precipitation of the aluminum solely by adding phosphate in a subsequent step. Aluminum starts to precipitate at a pH of 2; however a pH of 4 should not be exceeded in this optional step as this would result in the loss of lithium by co-precipitation. The neutralization is typically performed below pH 3, to avoid the co-precipitation of lithium at higher pH values. Noteworthy is that the neutralization of the leach solution can also be performed using e.g. lithium-bearing slag itself, as long as the pH of neutralization is chosen in such a way that a sufficient percentage of the lithium present in the slag would dissolve. A pH below 3 is adequate.

The removal of a further part of the dissolved aluminum is performed by adding a suitable phosphate source to the lithium-bearing solution. The amount of phosphate to be added is preferably stoichiometric with respect to the amount of dissolved aluminum. Suitable phosphate sources are H₃PO₄, Na₃PO₄, Na₂HPO₄, NaH₂PO₄, Li₃PO₄, as well as NH₄, K and Ca phosphates, and phosphate sludge.

An optional neutralization of the third leachate allows for the precipitation of a third part of the aluminum in a residue. This option is useful when the phosphate addition is performed at too low a pH, or when using an acidic phosphate source such as phosphoric acid. The precipitation of said second part of the aluminum during phosphate addition will then not be complete because the solubility of aluminum phosphate depends strongly on the pH. This residual aluminum can be precipitated by raising the pH to 3 to 4 using an ordinary neutralizing agent as above. Typically, less than 1 mg/L Al will be present in solution after neutralization to pH 3 to 4.

As the skilled person will appreciate, additional solid-liquid separation steps can be interspersed after each step leading to the formation of a precipitate, in order to separate the various residues from each other. These separations are entirely optional and do not significantly alter the defined process.

The essence of the process is thus to add phosphate anions to the leach, in an amount that is at least stoichiometric with respect to the dissolved aluminum, and to control the pH to 2 to 4, preferably to 3 to 4, thereby precipitating aluminum phosphate, which can be separated from the leach.

The remarkable feature of the present invention is clearly the fact that the formation of aluminum phosphate is favored over the undesired precipitation of lithium aluminates. Significant lithium losses can thus be avoided while aluminum is essentially eliminated from solution.

After removal of aluminum, the further refining of the lithium solution can be performed by known processes. These could comprise hydrolysis, evaporation and concentration, removal of magnesium and calcium by means of carbonate precipitation. Pure lithium carbonate can finally be prepared e.g. by reacting the purified solution with sodium carbonate.

Example 1 illustrates the co-dissolution of aluminum during the leaching of lithium slag.

A slag containing approximately 2.5% Li was submitted to a leaching test in order to assess the leachability of lithium. Approximately 300 g of slag was repulped in 1.0 L water, and the slurry was heated to 70 °C. Upon reaching this temperature, H₂SO₄ was slowly added to acidify the pulp and dissolve the lithium. The H₂SO₄ dosing was performed in such a way that the acidity of the pulp reached a pH of 4. After equilibration for a period of 12 hours at pH 4, a first slurry sample was taken. Subsequently, the pH of the slurry was further decreased in a stepwise fashion and after each pH adjustment, the slurry was equilibrated for at least 12 hours before taking a sample.

The samples taken at pH 3, 2.5, 2, and 1, were all filtered and washed. Both the filtrates, wash waters and residues were analyzed for Li as well as for the typical slag formers being Ca, Si and Al. An overview of the filtrate compositions and the calculated metal leach yields is shown in Table 1.

The results reveal that the majority of the lithium can be dissolved already at pH 2.5. Unfortunately, the co-dissolution of Al is already significant at this pH. As a result of this unfavorable behavior of AI, the filtrates that are obtained in the lower pH region contain considerably more Al than Li.

The conclusion can be drawn that with this type of slag, it is not possible to combine good Li leach yields with a good selectivity towards Al. This means that high Li leach yields will necessarily result in the presence of large amounts of unwanted Al in solution.

**Table 1. Compositions and yields in function of the pH when leaching a slag**

| | Filtrate (g/L) | | | | Leaching yield (%) | | | |
|---|---|---|---|---|---|---|---|---|
| | Li | Ca | Si | Al | Li | Ca | Si | Al |
| pH of sampling | | | | | | | | |
| 4.0 | 2.6 | 0.62 | 0.29 | 0.07 | 30 | 1 | 1 | 0 |
| 3.0 | 3.7 | 0.72 | 0.28 | 3.5 | 46 | 1 | 1 | 7 |
| 2.5 | 5.8 | 0.73 | 0.29 | 27 | 96 | 1 | 1 | 60 |
| 2.0 | 5.5 | 0.62 | 0.38 | 31 | 97 | 1 | 1 | 73 |
| 1.0 | 5.3 | 0.59 | 0.53 | 26 | 98 | 1 | 2 | 86 |

Example 2 shows how Al can be precipitated from solution selectively when phosphates are used.

A synthetic solution containing 20 g/L Li, 10 g/L Al and 3 g/L Fe²⁺ was prepared using Li₂CO₃ and sulfate salts of Al and Fe. H₂SO₄ was added to obtain an acidic solution at pH 1.5. Subsequently, 145 g of solid sodium phosphate (Na₃PO₄.12H₂O) was added to 1.0 L of the synthetic solution; this addition represented a 100% stoichiometry with respect to the amount of Al in solution.

**Table 2. Compositions in function of pH when precipitating with phosphate**

| | | Li | Al | PO₄³⁻ | Fe |
|---|---|---|---|---|---|
| Start solution | (g/L) | 20 | 10 | 0 | 3 |
| pH of sampling | | | | | |
| 2.6 | Filtrate (g/L) | 16 | 8.6 | 31 | 2.6 |
| | Residue (%) | < 0.05 | 17 | | 1 |
| 3 | Filtrate (g/L) | 15 | 0.7 | 3.1 | 2.1 |
| | Residue (%) | < 0.05 | 18 | | 0.4 |
| 4 | Filtrate (g/L) | 14 | 0.005 | < 0.3 | 2.1 |
| | Residue (%) | < 0.05 | 19 | | 0.5 |

Upon addition of the sodium phosphate, the pH slightly increased, but NaOH was used to further neutralize the solution to pH 2.6, after which a first sample was taken.

Next, the pH was further increased to pH 3 and 4 in order to investigate the behavior of the various metals of interest. Each of the three samples was filtered and washed, after which both the filtrates and the residues were analyzed. The analytical results are given in Table 2.

From these results, it becomes clear that only a limited amount of Al precipitates at pH 2.6. The removal becomes more efficient at higher pH and at pH 4.0 the residual Al concentration is as low as 5 mg/L. Chemical analysis of the residues shows that the Li content remains below the detection limit of 500 ppm in all cases. This is a clear indication that no Li is lost to the alumina-bearing cake. Finally, the various Fe analyses show that less than 10% of that metal reports to the residue.

The important conclusion that can be drawn from this test is the following: when Al is removed from solution as an AlPO₄ precipitate, no Li significant losses are encountered.

**Example 3** shows how Al can be selectively removed from the filtrate of a slag leaching operation when Na₃PO₄ is applied as phosphate source.

The first part of example 3 is performed in a way similar to that of example 1: approximately 300 g of a Li-containing slag were repulped in 1.0 L of water and the slurry was heated to 70 °C. Upon reaching that temperature, H₂SO₄ was slowly added to acidify the pulp and dissolve the Li. The H₂SO₄ dosing was performed so as to stabilize the pH at 2.5. After 5 hours, no more acid was consumed and the leaching operation was stopped. The slurry was filtered and chemical analysis showed that 6.8 g/L Li and 24 g/L Al were present in the leach solution. Leach yields of 94% and 47% were calculated for Li and Al.

Approximately 500 mL of the filtrate was slightly diluted and heated to 90 °C and Na₃PO₄ was slowly added as a phosphate source for precipitation of Al. The stoichiometric Na₃PO₄ requirement was calculated to be 73 g. After this amount had been added, the pH increased to 3.9. The slurry was left to equilibrate for approximately 3 hours before it was filtered. The residue was subsequently washed and both filtrate and residue were analyzed. The filtrate was found to contain less than 10 mg/L AI. From the chemical analyses of the residue, a lithium loss of less than 1% was calculated.

The results from this example show that relatively large amounts of Al can be precipitated from a slag leaching filtrate with high selectivity towards lithium when an appropriate phosphate source is used as precipitating agent.

**Example 4** is presented to show how Li-containing slags and a suitable phosphate source can be used in one process.

A synthetic solution containing 18 g/L Li and 50 g/L H₂SO₄ was heated to 70°C and neutralized to pH 2.5 using milled Li-bearing slag. After the undissolved fraction was removed by means of filtration, the filtrate was analyzed to contain 19.1 g/L Li, and 6.2 g/L Al.

In order to precipitate all Al from solution, a stoichiometric amount of 38 g of Na₃PO₄ was added to 1.0 L of the leach solution. Subsequently, the solution was further neutralized to pH 4.1, and another filtration was performed. The filtrate was analyzed to contain less than 10 mg/L Al.

The results obtained with this experiment show that it is possible to use a combination of Li slags and a suitable phosphate source, which in this case was Na₃PO₄, to effectively neutralize an acidic solution that is typically encountered in spodumene processing.

## Claims

1. Process for the recovery of lithium from lithium- and aluminum-bearing metallurgical composition, comprising the steps of:
- Leaching the metallurgical composition by contacting with a sulfuric acid aqueous solution at a pH of 3 or less, thereby obtaining a residue comprising insoluble compounds, and a first leachate comprising lithium and aluminum;
- Optionally neutralizing the first leachate comprising lithium and aluminum to a pH of 2 to 4, thereby precipitating a residue comprising a first part of the aluminum, and obtaining a second leachate comprising lithium;
- Adding a source of phosphate ions to the first leachate comprising lithium and aluminum, or, with the proviso that the optional neutralizing of the first leachate is performed, to the second leachate comprising lithium and aluminum, thereby precipitating a residue comprising a second part of the aluminum, and obtaining a third leachate comprising lithium;
- Optionally neutralizing the third leachate comprising lithium and aluminum to a pH of 3 to 4, thereby precipitating a residue comprising a third part of the aluminum, and obtaining a fourth leachate comprising lithium; and,
- Separating the residue comprising the second part of the aluminum from the third leachate by filtration, or, with the proviso that the optional neutralizing of the third leachate is performed, separating the residue comprising the third part of the aluminum from the fourth leachate by filtration.

2. Process according to 1, wherein, after the step of leaching and before the step of adding a source of phosphate, the first leachate comprising lithium and aluminum is separated by filtration.

3. Process according to claims 1 or 2, wherein, after the optional step of neutralizing the first leachate and before the step of adding a source of phosphate, the second leachate comprising lithium and aluminum is separated by filtration.

4. Process according to any one of claims 1 to 3, wherein lithium is precipitated from the fourth leachate, and separated by filtration.

5. Process according to any one of claims 1 to 4, wherein the metallurgical composition is a metallurgical slag.

## Patentansprüche

1. Verfahren zur Rückgewinnung von Lithium aus einer lithium-_und aluminiumhaltigen metallurgischen Zusammensetzung, umfassend die Schritte:
- Auslaugen der metallurgischen Zusammensetzung durch Inkontaktbringen mit einer wässrigen Schwefelsäurelösung bei einem pH-Wert von 3 oder weniger, wodurch ein Rückstand, der unlösliche Verbindungen umfasst, und ein erstes Sickerwasser, das Lithium und Aluminium umfasst, erhalten wird;
- Optionales Neutralisieren des ersten Sickerwassers, das Lithium und Aluminium umfasst, auf einen pH-Wert von 2 bis 4, wodurch ein Rückstand ausgefällt wird, der einen ersten Teil des Aluminiums umfasst, und Erhalten eines zweiten Sickerwassers, das Lithium umfasst;
- Zugeben einer Phosphationenquelle zu dem ersten Sickerwasser, das Lithium und Aluminium umfasst, oder, mit der Maßgabe, dass die optionale Neutralisierung des ersten Sickerwassers durchgeführt wird, zu dem zweiten Sickerwasser, das Lithium und Aluminium umfasst, wodurch ein Rückstand ausgefällt wird, der einen zweiten Teil des Aluminiums umfasst, und Erhalten eines dritten Sickerwassers, das Lithium umfasst;
- Optionales Neutralisieren des dritten Sickerwassers, das Lithium und Aluminium umfasst, auf einen pH-Wert von 3 bis 4, wodurch ein Rückstand ausgefällt wird, der einen dritten Teil des Aluminiums umfasst, und Erhalten eines vierten Sickerwassers, das Lithium umfasst; und
- Abscheiden des Rückstands, der den zweiten Teil des Aluminiums umfasst, von dem dritten Sickerwasser durch Filtration, oder, mit der Maßgabe, dass die optionale Neutralisierung des dritten Sickerwassers durchgeführt wird, Abscheiden des Rückstands, der den dritten Teil des Aluminiums umfasst, von dem vierten Sickerwasser durch Filtration.

2. Verfahren nach 1, wobei nach dem Schritt des Auslaugens und vor dem Schritt des Zugebens einer Phosphatquelle das erste Sickerwasser, das Lithium und Aluminium umfasst, durch Filtration abgeschieden wird.

3. Verfahren nach Anspruch 1 oder 2, wobei nach dem optionalen Schritt der Neutralisierung des ersten Sickerwassers und vor dem Schritt des Zugebens einer Phosphatquelle das zweite Sickerwasser, das Lithium und Aluminium umfasst, durch Filtration abgeschieden wird.

4. Verfahren nach einem der Ansprüche 1 bis 3, wobei Lithium aus dem vierten Sickerwasser ausgefällt und durch Filtration abgeschieden wird.

5. Verfahren nach einem der Ansprüche 1 bis 4, wobei die metallurgische Zusammensetzung eine metallurgische Schlacke ist.

## Revendications

1. Procédé pour la récupération de lithium à partir d'une composition métallurgique comportant du lithium et de l'aluminium, comprenant les étapes consistant à :
- lixivier la composition métallurgique par mise en contact avec une solution aqueuse d'acide sulfurique à un pH de 3 ou moins, ce qui permet d'obtenir un résidu comprenant des composés insolubles, et un premier lixiviat comprenant du lithium et de l'aluminium ;
- facultativement neutraliser le premier lixiviat comprenant du lithium et de l'aluminium à un pH de 2 à 4, ce qui précipite un résidu comprenant une première partie de l'aluminium, et permet d'obtenir un deuxième lixiviat comprenant du lithium ;
- ajouter une source d'ions phosphate au premier lixiviat comprenant du lithium et de l'aluminium, ou, à condition que la neutralisation facultative du premier lixiviat soit mise en œuvre, au deuxième lixiviat comprenant du lithium et de l'aluminium, ce qui précipite un résidu comprenant une deuxième partie de l'aluminium, et permet d'obtenir un troisième lixiviat comprenant du lithium ;
- facultativement neutraliser le troisième lixiviat comprenant du lithium et de l'aluminium à un pH de 3 à 4, ce qui précipite un résidu comprenant une troisième partie de l'aluminium, et permet d'obtenir un quatrième lixiviat comprenant du lithium ; et,
- séparer le résidu comprenant la deuxième partie de l'aluminium par rapport au troisième lixiviat par filtration, ou, à condition que la neutralisation facultative du troisième lixiviat soit mise en œuvre, séparer le résidu comprenant la troisième partie de l'aluminium par rapport au quatrième lixiviat par filtration.

2. Procédé selon 1, dans lequel, après l'étape de lixiviation et avant l'étape d'ajout d'une source de phosphate, le premier lixiviat comprenant du lithium et de l'aluminium est séparé par filtration.

3. Procédé selon les revendications 1 ou 2, dans lequel, après l'étape facultative de neutralisation du premier lixiviat et avant l'étape d'ajout d'une source de phosphate, le deuxième lixiviat comprenant du lithium et de l'aluminium est séparé par filtration.

4. Procédé selon l'une quelconque des revendications 1 à 3, dans lequel du lithium est précipité du quatrième lixiviat, et séparé par filtration.

5. Procédé selon l'une quelconque des revendications 1 à 4, dans lequel la composition métallurgique est un laitier métallurgique.
